# EUROPEAN PATENT SPECIFICATION

(11) **EP 3 214 365 B1**
(45) Date of publication and mention of the grant of the patent: **13.02.2019**
(21) Application number: 17157487.4
(22) Date of filing: 22.02.2017
(51) Int. Cl.: F21V 8/00, F21V 25/12, F21V 23/00, G02B 6/00, F21Y 105/00, F21Y 115/10

(54) **LIGHTING APPARATUS**
BELEUCHTUNGSVORRICHTUNG
APPAREIL D'ÉCLAIRAGE

(30) Priority: 04.03.2016 GB 201603757
(43) Date of publication of application: 06.09.2017
(73) Proprietor: Lumenox Limited, Garretts Green Birmingham B33 0TG (GB)
(72) Inventor: HALTON, Luke Wilfred James, Stratford upon Avon, Warwickshire CV37 9PF (GB); BUCHANAN, William Kit, Bidford upon Avon, Warwickshire B50 4BF (GB); WHORROD, Roger Brian, Nr. Alcester, Warwickshire B49 6JW (GB)
(74) Representative: Ashton, Gareth Mark

(56) References cited:
- GB-A- 2 398 372
- GB-A- 2 518 824

## Description

The present invention relates to a lighting apparatus, in particular a lighting apparatus comprising a lighting cup and a waveguide having an end inserted into the lighting cup, the lighting cup configured to emit light into the end of the waveguide.

### BACKGROUND OF THE INVENTION

Light Emitting Diodes (LEDs) are becoming more and more prevalent in the lighting industry, largely due to the improved efficiencies and longer lifetimes that they offer over known incandescent and gas discharge lamps. Known fluorescent strip lighting can be replaced by LED lighting, and a known technique for doing this is to replace the fluorescent strip light with a waveguide such as a transparent cylinder, and to direct light from an LED into an end of the transparent cylinder. Light travels along the transparent cylinder by total internal reflection, and is reflected out of the cylinder by a reflective strip that is aligned along the length of the cylinder.

One such arrangement is described in publication GB 2 398 372 A which discloses an LED that directs light into an end of an acrylic rod. The acrylic rod has a reflector that reflects light travelling along the acrylic rod out of the acrylic rod. The LED is slid into a tube of a housing holding the acrylic rod, and has wire terminals that are connected to cables for powering the LED. Publication GB 2 518 824 A discloses another lighting apparatus of particular interest.

However, there is a need to make this type of lighting more suitable for hazardous environments having potentially explosive atmospheres, for example on oil rigs. In such environments, sparking from an electrical component could result in an explosion, and so all electrical components need to be sufficiently well protected from the atmosphere to prevent any sparking from leading to explosions.

It is therefore an aim of the invention to provide a lighting apparatus suitable for use in hazardous environments having potentially explosive atmospheres.

### SUMMARY OF THE INVENTION

According to various embodiments of the invention, there is provided a lighting apparatus according to any one of the appended claims. The lighting apparatus comprises a lighting cup and a waveguide having an end at the lighting cup, the lighting cup configured to emit light into the end of the waveguide, and the waveguide comprising a reflector aligned along a length of the waveguide for emitting the light from the waveguide. The lighting apparatus further comprises a light emitting diode, LED, package mounted inside the lighting cup, and the lighting cup is filled with an encapsulant material to exclude gases in the environment away from any conductors of the LED package that could cause sparking.

As well as excluding gases from the conductors to prevent sparking, the encapsulant material may exclude gases from the hottest areas of the LED package, for example one or more areas from which light is emitted, to reduce the temperatures that the gases are exposed to. Accordingly, the lighting apparatus is safe for use in hazardous environments where explosive gases may be present.

The reflector of the waveguide may for example be a screen-printed white strip applied to the outside surface of the waveguide, along the length of the waveguide. The reflector extends only partially around a longitudinal axis of the waveguide, allowing light to exit along the uncovered portion of the waveguide, as will be apparent to those skilled in the art. The waveguide may be a transparent acrylic strip, although other types of transparent materials could alternatively be used. The term "transparent" in this document is intended to encompass materials allowing light transmission therethrough, and so transparent materials are considered to include translucent materials.

The encapsulant material may cover over the LED package within the cup, to exclude gases in the environment away from the LED package. Preferably, the encapsulant material excludes gases in the environment away from all conductors of the LED package, or at least away from conductors which are sufficiently close to one another that sparking could result between the conductors during operation of the LED package. For example, the encapsulant material may cover over the LED package such that no bare conductors and/or no bare conductive terminals of the LED package are left exposed to any gases in the environment of the lighting apparatus. The encapsulant material may fully cover over the LED package, as well as just covering any bare conductors and/or bare conductive terminals.

The encapsulant material can be any suitable material, for example an epoxy resin or a silicone material. The encapsulant material may be chosen for its electrical encapsulation properties, its bonding properties, its resilience to extreme temperature ranges, and even its colour and light absorption or reflection properties. The encapsulant material is typically transparent at a region of the encapsulant that is within the light path from the LED to the waveguide, and is optionally opaque beyond that region. For example, the encapsulant material may be coloured white around the borders of that region to aid light reflection towards the waveguide. Typically, the encapsulant material transitions from an uncured, fluid form, to a cured, solid form, after the encapsulant material has been filled into the cup.

The lighting cup may comprise a reflector element, the reflector element configured to reflect light from the LED package and towards the end of the waveguide, to improve transmission of light into the waveguide. The reflector element may comprise one or more holes through it. Then, each hole can allow the fluid, uncured encapsulant material to flow through the reflector element during manufacturing, helping the encapsulant material reach all empty areas within the lighting cup.

The reflector element may be cone shaped and orientated with a narrowest end of the cone adjacent the LED package, to help capture light from the LED and direct it into the waveguide. The cone may have a circular cross section, although could alternatively have an angular cross section, for example rectangular. If the LED package comprises an LED chip mounted on a circuit board, then the narrowest end of the cone may extend fully around a perimeter of the LED chip, with the circuit board extending beyond an area enclosed by the narrowest end of the cone, to improve the capture of light from the LED chip.

Advantageously, the reflector element may be formed by the encapsulant material comprising a white coloured portion that surrounds a transparent portion within the white coloured portion. The transparent portion may transmit light, and the white coloured portion may reflect light into the transparent portion, constraining it to the transparent portion.

The waveguide may comprise a lens portion at the end of the waveguide for directing light from the LED package towards a main body of the waveguide. The encapsulant material may extend around the lens portion of the waveguide and over the LED package. Optionally, an end of the lens portion may form a cavity over an LED chip of the LED package, the cavity being sealed by the encapsulant material to exclude any gases from entering the cavity. The encapsulant material may be opaque, for example white, to constrain light from the LED within the lens portion and reflect it towards the main body of the waveguide. Optionally, the cavity formed by the lens portion may be filled with a transparent encapsulant material.

The lighting cup may comprise a base, a collar into which the end of the waveguide is inserted, and sidewalls extending from the base to the collar, wherein the sidewalls, the base, and the end of the waveguide together define a cavity inside of the cup where the LED package is mounted. Preferably, the cavity is substantially fully enclosed by the sidewalls, the base, and the end of the waveguide. The collar may comprise an alignment feature for engaging with a corresponding alignment feature of the waveguide, to rotationally align the waveguide with the cup, so that the light is emitted from the waveguide in the correct direction relative to the cup. The lighting cup may comprise a hole therethrough, at a region between the sidewalls and the reflector element, to aid flowing of the encapsulant material prior to curing of the encapsulant material during manufacture of the lighting apparatus.

The reflector element and the collar may be integrally formed in one piece, and optionally the sidewalls are also formed by that piece, to simplify manufacturing. Or, the collar and sidewalls may be integrally formed in one piece, with the reflector element being separate to it. The reflector element, collar, and sidewalls may be moulded from a plastics material. The reflector element may have a white surface to perform the reflection.

Advantageously, the circuit board of the LED package may be mounted on the base of the lighting cup, the base forming a heatsink for dissipating heat away from the LED package. Accordingly, the base may be made of metal to help facilitate dissipation of heat.

The sidewalls and the base may be integrally formed in one piece, and optionally the base may be a sidewall of a housing of the lighting apparatus, to help ease assembly by defining the position where the lighting cup is located on the sidewall. The sidewall of the housing may include an outside surface of the housing, and may therefore transfer heat from the cup to the outside environment. Alternatively, the base of the lighting cup may be a printed circuit board that supplies electrical power to the LED package. The printed circuit board base may be sealed against the sidewalls to help prevent any external gases from entering the cup. Preferably, the printed circuit board is a metal core printed circuit board to facilitate heat transfer away from the LED package.

The lighting apparatus may comprise one or more power cables passing through the base or sidewalls, into the cup, and connecting to the LED package, to power the LED package. The one or more power cables comprise conductors and an insulator around each conductor, to prevent the conductor from coming into contact with any gases that may be present within the environment of the power cables. The one or more power cables may be connected to the LED package via a terminal block certified for use in hazardous environments. Alternatively, the one or more power cables may be connected directly to the LED package, by displacing the insulators of the one or more power cables from the conductors at terminal ends of the conductors, and connecting the terminal ends to the LED package, with the encapsulant material being used to cover over the terminal ends and a portion of the insulator around each conductor. Then, the terminal ends are not exposed to any gases in the environment.

The lighting apparatus may comprise an LED driver external to the lighting cup, for powering the LED package. The LED driver may be connected to the LED package via the one or more power cables, and the LED driver may be encapsulated depending upon its type.

The lighting apparatus may further comprise a further lighting cup that is the same as the lighting cup, wherein another end of the waveguide is at the further lighting cup, the further lighting cup configured to emit light into the another end of the waveguide. Then, light is emitted into both ends of the waveguide, and the lighting cups may together hold the waveguide in place.

There is further provided a method of manufacturing the lighting apparatus, the method comprising: forming the lighting cup and mounting the LED package inside of the lighting cup; filling the lighting cup with the transparent encapsulant material when in fluid form, to encapsulate the LED package inside of the lighting cup; and fixing the end of the waveguide at the lighting cup. Since the encapsulant is filled into the lighting cup in fluid form, a very effective barrier can be created between the LED package and the external environment. The encapsulant cures to a solid after the filling has taken place.

### DETAILED DESCRIPTION

Embodiments of the invention will now be described by way of non-limiting example only and with reference to the accompanying drawings, in which:
Fig. 1 shows a schematic diagram of a lighting apparatus according to a first embodiment of the invention;
Fig. 2 shows a schematic diagram of a lighting apparatus according to a second embodiment of the invention;
Fig. 3 shows a schematic diagram of a lighting apparatus according to a third embodiment of the invention;
Fig. 4 shows a schematic diagram of a lighting apparatus according to a fourth embodiment of the invention;
Fig. 5 shows a schematic diagram of a lighting apparatus according to a fifth embodiment of the invention;
Fig. 6 shows a schematic diagram of a lighting apparatus which incorporates a lighting apparatus similar to that of Fig. 1;
Fig. 7 shows a schematic diagram of another lighting apparatus which incorporates a lighting apparatus similar to that of Fig. 1;
Fig. 8 shows a flow diagram of a method according to an embodiment of the invention.

The figures are not to scale, and same or similar reference signs denote same or similar features.

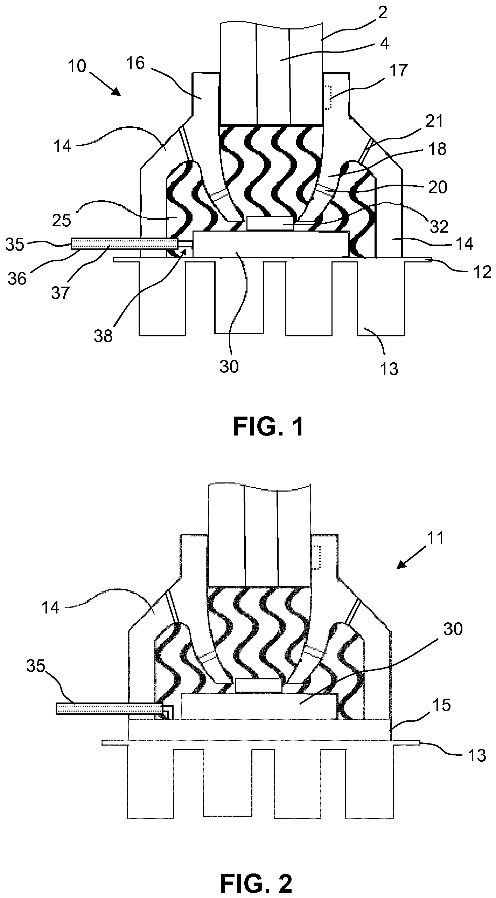

A first embodiment of the invention will now be described with reference to Fig. 1, which shows a lighting apparatus comprising a waveguide 2 and a lighting cup 10. The waveguide 2 is a transparent cylinder, and the top of the cylinder has been truncated from the view shown in Fig. 1 for clarity. The waveguide 2 has a reflective strip 4 on the outside of the cylinder, and which extends along the length of the cylinder and only partially around the circumference of the cylinder. In this particular embodiment, the transparent cylinder is formed of acrylic, and the reflective strip 4 has been screen printed onto the acrylic. However other materials for forming the cylinder and other methods of creating the reflective strip may alternatively be used, as will be apparent to those skilled in the art. The reflective strip 4 is coloured white in this embodiment, however it could be coloured a different colour to produce a different colour light. For example the reflective strip could be coloured green to impart a green colour to the light for emergency lighting.

The lighting cup 10 comprises a base 12, sidewalls 14 connected to the base and extending upwardly therefrom, and a collar 16 supported by the sidewalls, opposite from the base. The collar 16 provides a circular aperture at the top of the cup, and the end of the cylindrical waveguide 2 is inserted into this circular aperture to connect the waveguide to the lighting cup, as shown.

To fix the rotation of the waveguide within the collar 16, the waveguide comprises a rib 17 which fits into a corresponding slot of the collar, as shown. These alignment features may also be used to help secure the waveguide in the collar, for example the rib may friction-fit into the slot.

The sidewalls 14 form a substantially tubular shape, extending from the collar 16 to the base 12. The collar 16 and the sidewalls 14 are moulded in one piece, from a plastics material. Although, the collar could be formed as a separate part from the sidewalls 14 in an alternate embodiment. The base 12 is formed by a metal heatsink 13, comprising fins for dissipation of heat.

The inside of the lighting cup provides an enclosed cavity that is formed between the base 12, the sidewalls 14, and the end of the waveguide 2. Inside the lighting cup 10, there is mounted an LED package, the LED package comprising an LED chip 32 on a circuit board 30. Such LED packages are commonly known in the art as chip-on-board (cob), although other types of LED package could alternatively be used. The circuit board 30 is mounted on the base 12, with the LED chip facing upwardly towards the end of the waveguide 2. A thin layer of thermal interface material (not shown Figs) is present between the circuit board 30 and base 12, to help conduct heat away from the circuit board 30.

Also inside the lighting cup 10, there is provided a reflector element 18 for reflecting light output from the LED chip towards the end of the waveguide 2. The reflector element is cone-shaped, with the narrowest end of the cone surrounding the LED chip 32, as shown. The reflector element is formed as an extension of the collar 16 towards the base, and the reflector element is moulded as part of the same piece of plastics material that forms the sidewalls 14 and collar 16. The reflector element is coloured white so that light will be reflected by it, although could be coloured in alternate colours if desired, for example silver.

The inside of the lighting cup 10 is filled with a transparent encapsulant material 25, which fully extends over the LED chip 32 and circuit board 30. The transparent encapsulant 25 fills the cavity of the lighting cup to exclude environmental gases from the LED chip 32 and circuit board 30. The transparent encapsulant 25 is filled into the cup whilst in fluid form, and is then allowed to harden. To help the transparent encapsulant 25 flow fully throughout the cavity, one or more holes 20 are provided through the reflector element 18, so the transparent encapsulant 25 can flow through the holes 20 to reach all parts of the cavity. One or more holes 21 are provided through the lighting cup 30, at regions between the sidewalls 14 and the reflector element 18. These can be used to pass encapsulant into the lighting cup, and/or to allow any trapped air to escape from the lighting cup as the encapsulant is filled into the lighting cup.

The LED package is powered via a power cable 35, which extends through a hole in the sidewalls 14 and connects to the circuit board 30. The power cable 35 comprises an insulative jacket 36, and two conductors 37 running inside the jacket. The jacket 36 insulates the conductors 37 from one another and from the external environment. The jacket 36 is stripped back from terminal ends 38 of the conductors 37, so that the conductors 37 are exposed and can be electrically connected to the circuit board 30. When the transparent encapsulant is filled into the lighting cup, it encapsulates the terminal ends 38 and a portion of the jacket 36, thereby excluding any gases in the external environment away from the terminal ends 38 and the electrical connections between the terminal ends 38 and the LED package.

The lighting cup 10 of this embodiment has a generally circular cross-section, although other cross-sectional shapes such as square or triangular shapes could be implemented in alternate embodiments. Additionally, the waveguide 2 could have an oval cross section, or an angular cross section, rather than a circular cross section.

A second embodiment of the invention is shown in Fig. 2, and the second embodiment is the same as the first embodiment, except for that the base of the lighting cup 11 is formed by a printed circuit board 15, rather than the heatsink 13. The printed circuit board 15 is mounted on the heatsink 13, for example adhered to the heatsink 13. The printed circuit board 15 is a metal-core printed circuit board, to assist in transfer of heat from the circuit board 30 to the heatsink 13.

The conductors of the power cable 35 are connected to the printed circuit board 15 in the second embodiment, rather than directly to the circuit board 30. The printed circuit board 15 includes circuitry for driving the LED package, and is electrically connected to the circuit board 30 via contact pads at the interface between the printed circuit board 15 and the circuit board 30. In an alternate embodiment, the printed circuit board 15 simply facilitates electrical connection between the power cable 35 and the circuit board 30, and the driver circuitry is remote from the lighting cup, for example at the other end of the power cable 35. The second embodiment allows the lighting cup to be manufactured separately from the heatsink 13. In another alternate embodiment, the printed circuit board 15 could be replaced with a metal plate, and the power cable 35 connected directly to the circuit board 30 in a similar manner to Fig. 1. The metal plate would allow the lighting cup to be more easily disassembled, for example to replace the LED chip.

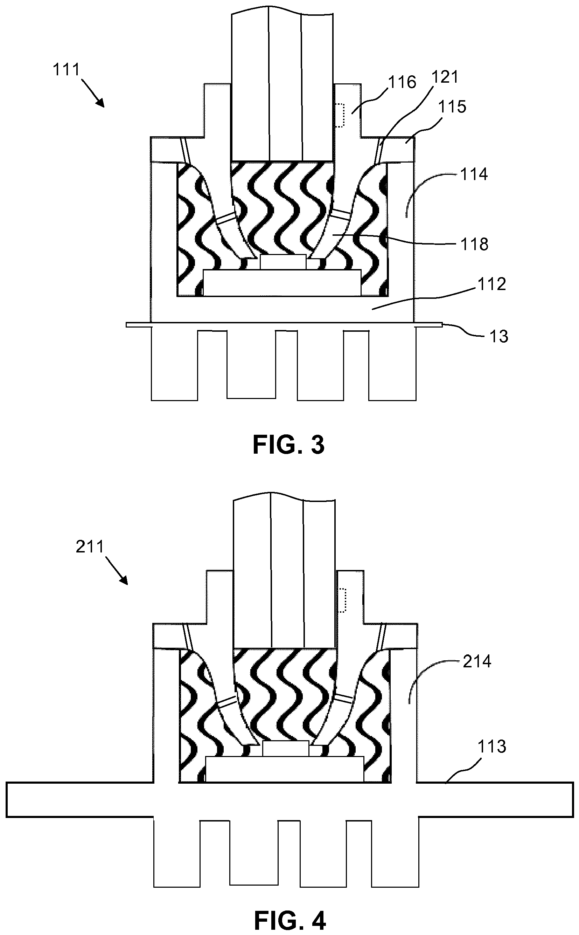

A third embodiment of the invention is shown in Fig. 3, and the third embodiment is the same as the first embodiment except for that the base 112 is formed integrally in one piece with the sidewalls 114 of the lighting cup 111. Therefore, the lighting cup 111 can be manufactured separately from the heatsink 13, and the base 112 can be mounted to the heatsink 13 at any desired position. The base 112 and sidewalls 114 are formed of metal, for example steel, to allow effective heat transfer from the LED package to the heatsink 13.

The collar 116 is formed with an annular ledge 115, which rests upon the top of the sidewalls. The collar 116 is formed integrally with the reflector element 118, and holds the reflector element 118 in position over the LED package. One or more holes 121 are provided through the lighting cup 111, at regions between the sidewalls 114 and the reflector element 118, similar to the holes 21 of Fig. 1 and Fig. 2.

A fourth embodiment of the invention is shown in Fig. 4, and the fourth embodiment is the same as the first embodiment, except for that the sidewalls 214 of the lighting cup 211 are formed integrally with the heatsink 113. This can be useful if the heatsink is part of a larger structure, for example a housing, since then the sidewalls 214 of the heatsink define whereabouts the lighting cup 211 should be located relative to the heatsink.

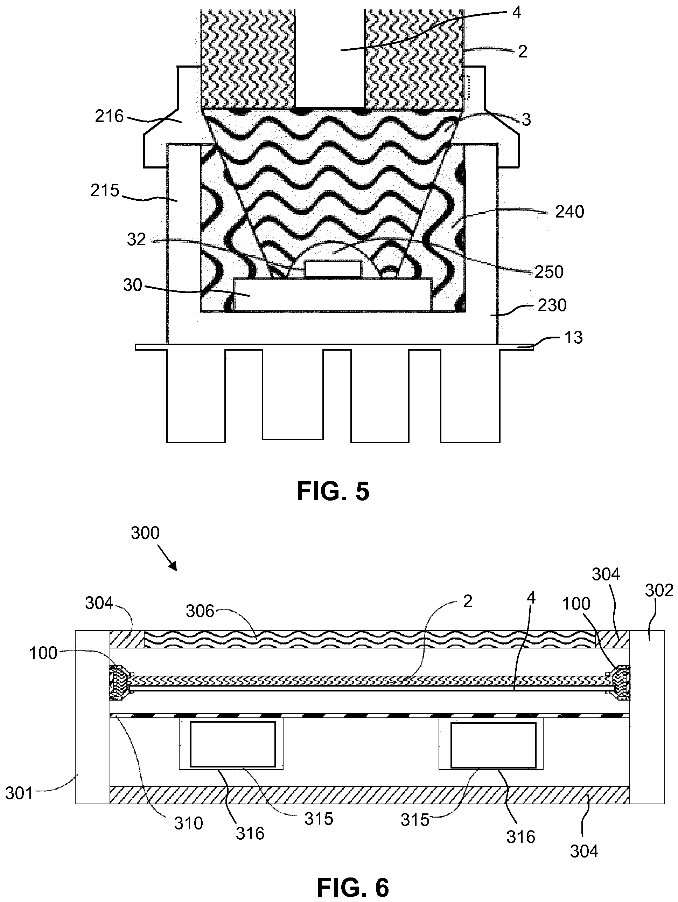

A fifth embodiment is shown in Fig. 5, and includes the heatsink 13, and waveguide 2 of the third embodiment. A metal cup 230 holds the circuit board 30 and LED chip 32 of the LED package. The metal cup 230 has sidewalls 215, and a separate collar 216 is attached at the top of the sidewalls 215, for receiving the waveguide 2.

In this embodiment, a lens 3 is placed inside of the lighting cup 230, for directing light from the LED chip 32 into the waveguide 2. The lens 3 has a conical shape, and extends from the waveguide 2, to the circuit board 30 of the LED package. The lens 3 also has a concave end, which defines a cavity 250 between the concave end and the circuit board 30, the LED chip 32 being in the cavity 250.

A white encapsulant material 240 is filled into the metal cup 230, sealing off the cavity 250 from the external environment, and covering over the circuit board 30. The white encapsulant material 240 forms a cone-shaped reflector element at its interface with the lens 3, and reflects any stray light from the LED chip 32 back towards the waveguide 2.

Fig. 6 shows a schematic diagram of a lighting apparatus 300 which incorporates a lighting apparatus similar to that of Fig. 1. The lighting apparatus 300 has a housing, comprising a tube 304, and two opposing sidewalls 301 and 302. The tube 304 incorporates a transparent window 306, for light to exit the lighting apparatus 300. The housing is formed by cutting a hole in the tube 304, covering the hole with the transparent window 306, and adding end-caps to the tube 304 to form sidewalls 301 and 302.

Inside the housing, each one of the sidewalls 301 and 302 has a lighting cup 100 mounted to it, the lighting cups 100 facing towards one another. A waveguide 2, the same as the waveguide 2 of Fig. 1, has its opposing ends inserted into the lighting cups 100. Accordingly, the lighting cups 100 emit light into the ends of the waveguide 2. The light travels along the waveguide 2, and is reflected upwardly out of the waveguide by the reflective strip 4. This light then passes through the transparent window 306, providing illumination.

The lighting cups 100 are the same as the lighting cups 10 of Fig. 1, except for that the sidewalls 301 and 302 form the base of the lighting cups 100, instead of the heatsink 13 of Fig. 1. The sidewalls 301 and 302 are metallic, and act as heatsinks to dissipate heat from the lighting cups. In alternate embodiments, the lighting cups 100 may be substantially the same as the lighting cup 11 of Fig. 2, the lighting cup 111 of Fig. 3, the lighting cup 211 of Fig. 4, or the lighting cup of Fig. 5.

Also inside of the housing, there is a tray 310 spanning between the sidewalls 301 and 302, and the tray 310 supports two LED drivers 315. The LED drivers 315 are both encapsulated with an encapsulant material 316 to avoid any electrical conductors being exposed to any gases present in the environment. The LED drivers 315 are connected to the lighting cups 10 by power cables (not shown in Fig. 6 for clarity), the power cables being the same as the power cable 35 of Fig. 1. One or both of the sidewalls 301, 302 may be removable lids, to help remove the lighting cups and/or waveguide from the housing to allow servicing.

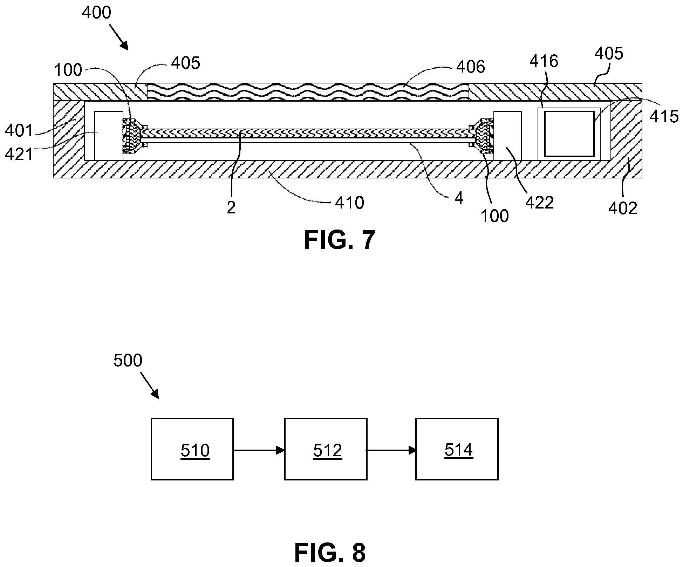

Fig. 7 shows a schematic diagram of another lighting apparatus 400 which incorporates a lighting apparatus similar to that of Fig. 1. The lighting apparatus 400 is similar to the lighting apparatus 300, however has heatsinks 421 and 422 that are separate from the sidewalls 401 and 402 of the housing, and that are used to mount the lighting cups 100. This can ease the manufacturing of the lighting apparatus 400, since the base 410 of the housing can be made integrally with the sidewalls 401 and 402, and the heatsinks 421 and 422 inserted into the housing along with the lighting cups and the waveguide afterwards. Then, the lid 405 of the housing, which incorporates a transparent window 406, can be attached to the tops of the sidewalls 401 and 402.

Additionally, in the lighting apparatus 400, the LED drivers 415 are arranged adjacent one end of the waveguide, rather than beneath the waveguide. This provides a lower profile lighting apparatus, and the portion of the housing where the LED drivers 415 are located may be used as a handle for holding the lighting apparatus. Additionally, a battery for powering the LED drivers 415 may also be housed in that portion of the housing. The LED drivers 415 are encapsulated within an encapsulant material 416. In alternate embodiments, the lighting cups 100 may be substituted with lighting cups similar to lighting cups 11, 111, or 211.

A method of manufacturing the lighting apparatus of Fig. 1 will now be described with reference to the flow diagram 500 of Fig. 8. In a first step 510, the circuit board 30 of the LED package is adhered to the heatsink 12, and the integrally formed sidewalls 14, collar 14, and reflector element 16 is adhered to the heatsink 12, over the top of the LED package. The power cable 35, which is connected to the circuit board 300, is passed through a hole in the sidewalls 14.

In a second step 511, the encapsulant material 25 is poured into the lighting cup, through the aperture provided by the collar 16 at the top of the cup. The encapsulant material flows down over the LED package and power cable 35, and also flows through the holes 20 in the reflector element 18. Then, the encapsulant cures to a solid.

In a third step 511, the end of the waveguide 2 is inserted into the aperture provided by the collar 16 at the top of the lighting cup. Optionally, an adhesive may be used to help secure the end of the waveguide in place within the aperture.

The other embodiments of Fig. 2 to Fig. 4 may be manufactured using similar methodologies to this. In the Fig. 5 embodiment, the reflector is replaced by the lens 3.

Many other variations of the described embodiments falling within the scope of the invention will be apparent to those skilled in the art.

## Claims

1. A lighting apparatus comprising a lighting cup (10) and a waveguide (2) having an end at the lighting cup, the lighting cup configured to emit light into the end of the waveguide, and the waveguide comprising a reflector (4) aligned along a length of the waveguide for emitting the light from the waveguide, wherein the lighting apparatus further comprises a light emitting diode, LED, package (30, 32) mounted inside the lighting cup, and **characterised in that** the lighting cup is filled with an encapsulant material (25) to exclude gases in the environment away from any conductors of the LED package that could cause sparking.

2. The lighting apparatus of claim 1, wherein the lighting cup (10) comprises a reflector element (18), the reflector element configured to reflect light from the LED package (30, 32) and towards the end of the waveguide (2).

3. The lighting apparatus of claim 2, wherein the reflector element (18) extends into the encapsulant material (25) and comprises a hole (20) therethrough, the hole allowing the encapsulant material to flow through the reflector element prior to curing of the encapsulant material, during manufacture of the lighting apparatus.

4. The lighting apparatus of claim 2 or 3, wherein the lighting cup (10) comprises a base (12) and sidewalls (14) extending from the base, the base and the sidewalls defining a cavity inside of the cup where the LED package is mounted, wherein the lighting cup comprises a hole (21) therethrough, at a region between the sidewalls (14) and the reflector element (18), to aid flowing of the encapsulant material prior to curing of the encapsulant material, during manufacture of the lighting apparatus.

5. The lighting apparatus of any one of claims 2 to 4, wherein the reflector element (18) is cone shaped and orientated with a narrowest end of the cone adjacent the LED package (30, 32), wherein the LED package comprises an LED chip (32) mounted on a circuit board (30), the encapsulant (25) covering over the circuit board and the LED chip inside of the cup, wherein the narrowest end of the cone extends fully around a perimeter of the LED chip (32), with the circuit board (30) extending beyond an area enclosed by the narrowest end of the cone.

6. The lighting apparatus of any one of claims 1 to 3, or of claim 5 when appended to claims 2 or 3, wherein the lighting cup (10) comprises a base (12) and sidewalls (14) extending from the base, the base and the sidewalls defining a cavity inside of the cup where the LED package is mounted.

7. The lighting apparatus of claim 4 or 6, wherein the lighting cup (10) further comprises a collar (16) into which the end of the waveguide (2) is inserted, the sidewalls (14) extending from the base (12) to the collar (16), and the end of the waveguide further defining the cavity inside of the cup where the LED package (30, 32) is mounted.

8. The lighting apparatus of claim 7 when claim 6 is appended to claim 5, or the lighting apparatus of claim 6 when appended to claim 5, wherein the circuit board (30) is mounted on the base (12) inside of the cavity, and wherein the base (12) of the lighting cup forms a heatsink (13) for the LED package.

9. The lighting apparatus of claim 8, wherein the base (15) of the lighting cup (11) is a printed circuit board that supplies electrical power to the LED package.

10. The lighting apparatus of any one of claims 6 to 9, further comprising one or more power cables (35) passing through the base or sidewalls (14), into the cup (10, 11), and connecting to the LED package (30, 32), the one or more power cables comprising conductors (37) and an insulator (36) around each conductor, the insulators being displaced from the conductors at terminal ends (38) of the conductors, the terminal ends connected to the LED package (30, 32), wherein the encapsulant material (25) encapsulates the terminal ends and a portion of the insulator around each conductor.

11. The lighting apparatus of any preceding claim, further comprising an encapsulated LED driver (315, 316; 415, 416) external to the lighting cup, for powering the LED package (30, 32).

12. The lighting apparatus (300) of any preceding claim, further comprising a housing enclosing the lighting cup and the waveguide, wherein the housing comprises a window (306) for light emitted from the waveguide to exit the lighting apparatus, and wherein the lighting cup (100) is mounted to a sidewall (301) forming an outer surface of the housing, the sidewall forming a heatsink.

13. The lighting apparatus of any preceding claim, further comprising a further lighting cup (100) that is the same as the lighting cup, wherein another end of the waveguide (2) is at the further lighting cup, the further lighting cup configured to emit light into the another end of the waveguide.

14. The lighting apparatus of claim 13 when appended to claim 12, wherein the further lighting cup (100) is mounted to another sidewall (302) forming another outer surface of the housing, the another sidewall forming a heatsink.

15. A method (500) of manufacturing the lighting apparatus of any one of the appended claims, the method comprising:
- forming (510) the lighting cup and mounting the LED package inside of the lighting cup;
- filling (512) the lighting cup with the encapsulant material when in fluid form, to encapsulate the LED package inside of the lighting cup; and
- fixing (514) the end of the waveguide to the lighting cup.

## Patentansprüche

1. Beleuchtungsvorrichtung mit einer Beleuchtungsschale (10) und einem Wellenleiter (2) mit einem Ende an der Beleuchtungsschale, wobei die Beleuchtungsschale dazu ausgelegt ist, Licht in das Ende des Wellenleiters zu emittieren, und der Wellenleiter einen Reflektor (4), der entlang einer Länge des Wellenleiters ausgerichtet ist, zum Emittieren des Lichts vom Wellenleiter umfasst, wobei die Beleuchtungsvorrichtung ferner eine Leuchtdioden-, LED-, Baugruppe (30, 32) umfasst, die innerhalb der Beleuchtungsschale montiert ist, und **dadurch gekennzeichnet, dass** die Beleuchtungsschale mit einem Einkapselungsmaterial (25) gefüllt ist, um Gase in der Umgebung von irgendwelchen Leitern der LED-Baugruppe auszugrenzen, die eine Funkenbildung verursachen könnten.

2. Beleuchtungsvorrichtung nach Anspruch 1, wobei die Beleuchtungsschale (10) ein Reflektorelement (18) umfasst, wobei das Reflektorelement dazu ausgelegt ist, Licht von der LED-Baugruppe (30, 32) und in Richtung des Endes des Wellenleiters (2) zu reflektieren.

3. Beleuchtungsvorrichtung nach Anspruch 2, wobei das Reflektorelement (18) sich in das Einkapselungsmaterial (25) erstreckt und ein Loch (20) durch dieses hindurch umfasst, wobei das Loch ermöglicht, dass das Einkapselungsmaterial vor dem Härten des Einkapselungsmaterials während der Herstellung der Beleuchtungsvorrichtung durch das Reflektorelement fließt.

4. Beleuchtungsvorrichtung nach Anspruch 2 oder 3, wobei die Beleuchtungsschale (10) eine Basis (12) und Seitenwände (14), die sich von der Basis erstrecken, umfasst, wobei die Basis und die Seitenwände einen Hohlraum innerhalb der Schale dort definieren, wo die LED-Baugruppe montiert ist, wobei die Beleuchtungsschale ein Loch (21) durch diese in einem Bereich zwischen den Seitenwänden (14) und dem Reflektorelement (18) umfasst, um den Fluss des Einkapselungsmaterials vor dem Härten des Einkapselungsmaterials während der Herstellung der Beleuchtungsvorrichtung zu unterstützen.

5. Beleuchtungsvorrichtung nach einem der Ansprüche 2 bis 4, wobei das Reflektorelement (18) kegelförmig ist und mit einem schmälsten Ende des Kegels benachbart zur LED-Baugruppe (30, 32) orientiert ist, wobei die LED-Baugruppe einen LED-Chip (32) umfasst, der auf einer Leiterplatte (30) montiert ist, wobei das Einkapselungsmittel (25) die Leiterplatte und den LED-Chip innerhalb der Schale überdeckt, wobei das schmälste Ende des Kegels sich vollständig um einen Umfang des LED-Chips (32) erstreckt, wobei sich die Leiterplatte (30) über einen Bereich hinaus erstreckt, der vom schmälsten Ende des Kegels umschlossen ist.

6. Beleuchtungsvorrichtung nach einem der Ansprüche 1 bis 3 oder Anspruch 5, wenn an die Ansprüche 2 oder 3 angefügt, wobei die Beleuchtungsschale (10) eine Basis (12) und Seitenwände (14), die sich von der Basis erstrecken, umfasst, wobei die Basis und die Seitenwände einen Hohlraum innerhalb der Schale dort definieren, wo die LED-Baugruppe montiert ist.

7. Beleuchtungsvorrichtung nach Anspruch 4 oder 6, wobei die Beleuchtungsschale (10) ferner einen Kranz (16) umfasst, in den das Ende des Wellenleiters (2) eingesetzt ist, wobei sich die Seitenwände (14) von der Basis (12) zum Kranz (16) erstrecken und das Ende des Wellenleiters ferner den Hohlraum innerhalb der Schale dort definiert, wo die LED-Baugruppe (30, 32) montiert ist.

8. Beleuchtungsvorrichtung nach Anspruch 7, wenn Anspruch 6 an Anspruch 5 angefügt ist, oder Beleuchtungsvorrichtung nach Anspruch 6, wenn an Anspruch 5 angefügt, wobei die Leiterplatte (30) an der Basis (12) innerhalb des Hohlraums montiert ist, und wobei die Basis (12) der Beleuchtungsschale einen Kühlkörper (13) für die LED-Baugruppe bildet.

9. Beleuchtungsvorrichtung nach Anspruch 8, wobei die Basis (15) der Beleuchtungsschale (11) eine gedruckte Leiterplatte ist, die elektrische Leistung zur LED-Baugruppe zuführt.

10. Beleuchtungsvorrichtung nach einem der Ansprüche 6 bis 9, die ferner ein oder mehrere Leistungskabel (35) umfasst, die durch die Basis oder die Seitenwände (14) in die Schale (10, 11) verlaufen und mit der LED-Baugruppe (30, 32) verbinden, wobei das eine oder die mehreren Leistungskabel Leiter (37) und einen Isolator (36) um jeden Leiter umfassen, wobei die Isolatoren von den Leitern an Anschlussenden (38) der Leiter verlagert sind, wobei die Anschlussenden mit der LED-Baugruppe (30, 32) verbunden sind, wobei das Einkapselungsmaterial (25) die Anschlussenden und einen Teil des Isolators um jeden Leiter einkapselt.

11. Beleuchtungsvorrichtung nach einem vorangehenden Anspruch, die ferner einen eingekapselten LED-Treiber (315, 316; 415, 416) außerhalb der Beleuchtungsschale zum Betreiben der LED-Baugruppe (30, 32) umfasst.

12. Beleuchtungsvorrichtung (300) nach einem vorangehenden Anspruch, die ferner ein Gehäuse umfasst, das die Beleuchtungsschale und den Wellenleiter umschließt, wobei das Gehäuse ein Fenster (306) umfasst, damit Licht, das vom Wellenleiter emittiert wird, aus der Beleuchtungsvorrichtung austritt, und wobei die Beleuchtungsschale (100) an einer Seitenwand (301) montiert ist, die eine äußere Oberfläche des Gehäuses bildet, wobei die Seitenwand einen Kühlkörper bildet.

13. Beleuchtungsvorrichtung nach einem vorangehenden Anspruch, die ferner eine weitere Beleuchtungsschale (100) umfasst, die dieselbe wie die Beleuchtungsschale ist, wobei ein anderes Ende des Wellenleiters (2) sich an der weiteren Beleuchtungsschale befindet, wobei die weitere Beleuchtungsschale dazu ausgelegt ist, Licht in das andere Ende des Wellenleiters zu emittieren.

14. Beleuchtungsvorrichtung nach Anspruch 13, wenn an Anspruch 12 angefügt, wobei die weitere Beleuchtungsschale (100) an einer anderen Seitenwand (302) montiert ist, die eine andere äußere Oberfläche des Gehäuses bildet, wobei die andere Seitenwand einen Kühlkörper bildet.

15. Verfahren (500) zur Herstellung der Beleuchtungsvorrichtung nach einem der beigefügten Ansprüche, wobei das Verfahren umfasst:
- Ausbilden (510) der Beleuchtungsschale und Montieren der LED-Baugruppe innerhalb der Beleuchtungsschale;
- Füllen (512) der Beleuchtungsschale mit dem Einkapselungsmaterial, wenn es sich in flüssiger Form befindet, um die LED-Baugruppe innerhalb der Beleuchtungsschale einzukapseln; und
- Befestigen (514) des Endes des Wellenleiters an der Beleuchtungsschale.

## Revendications

1. Appareil d'éclairage, comprenant une coupelle d'éclairage (10) et un guide d'ondes (2) comportant une extrémité au niveau de la coupelle d'éclairage, la coupelle d'éclairage étant configurée de façon à émettre de la lumière dans l'extrémité du guide d'ondes, et le guide d'ondes comprenant un réflecteur (4) aligné le long d'une longueur du guide d'ondes de façon à émettre la lumière à partir du guide d'ondes, l'appareil d'éclairage comprenant de plus un ensemble de diodes électroluminescentes, DEL, (30, 32) monté à l'intérieur de la coupelle d'éclairage, et étant **caractérisé en ce que** la coupelle d'éclairage est remplie par un matériau encapsulant (25) afin d'exclure des gaz dans l'environnement éloignés de tous conducteurs de l'ensemble de diodes électroluminescentes, ceux-ci pouvant provoquer des étincelles.

2. Appareil d'éclairage selon la revendication 1, dans lequel la coupelle d'éclairage (10) comprend un élément réflecteur (18), l'élément réflecteur étant configuré de façon à réfléchir la lumière à partir de l'ensemble de diodes électroluminescentes (30, 32) et vers l'extrémité du guide d'ondes (2).

3. Appareil d'éclairage selon la revendication 2, dans lequel l'élément réflecteur (18) s'étend dans le matériau encapsulant (25) et comprend un trou (20) à travers celui-ci, le trou permettant au matériau encapsulant de s'écouler à travers l'élément de réflecteur avant le durcissement du matériau encapsulant, durant la fabrication de l'appareil d'éclairage.

4. Appareil d'éclairage selon la revendication 2 ou 3, dans lequel la coupelle d'éclairage (10) comprend une base (12) et des parois latérales (14) s'étendant à partir de la base, la base et les parois latérales définissant une cavité à l'intérieur de la coupelle dans laquelle est monté l'ensemble de diodes électroluminescentes, la coupelle d'éclairage définissant une cavité à l'intérieur de la coupelle dans laquelle est monté l'ensemble de diodes électroluminescentes, la coupelle d'éclairage comprenant un trou (21) à travers celle-ci, dans une région entre les parois latérales (14) et l'élément réflecteur (18), de façon à assister l'écoulement du matériau encapsulant avant le durcissement du matériau encapsulant, durant la fabrication de l'appareil d'éclairage.

5. Appareil d'éclairage selon l'une quelconque des revendications 2 à 4, dans lequel l'élément de réflecteur (18) est en forme de cône et est orienté avec l'extrémité la plus étroite du cône au voisinage de l'ensemble de diodes électroluminescentes (30, 32), l'ensemble de diodes électroluminescentes comprenant une puce de diodes électroluminescentes (32) montée sur un circuit imprimé (30), l'encapsulant (25) recouvrant le circuit imprimé et la puce de diodes électroluminescentes à l'intérieur de la coupelle, l'extrémité la plus étroite du cône s'étendant complètement autour d'un périmètre de la puce de diodes électroluminescentes (32), le circuit imprimé (30) s'étendant au-delà d'une zone renfermée par l'extrémité la plus étroite du cône.

6. Appareil d'éclairage selon l'une quelconque des revendications 1 à 3, ou de la revendication 5 lorsqu'elle dépend des revendications 2 ou 3, dans lequel la coupelle d'éclairage (10) comprend une base (12) et des parois latérales (14) s'étendant à partir de la base, la base et les parois latérales définissant une cavité à l'intérieur de la coupelle dans laquelle est monté l'ensemble de diodes électroluminescentes.

7. Appareil d'éclairage selon la revendication 4 ou 6, dans lequel la coupelle d'éclairage (10) comprend de plus un collier (16) dans laquelle est insérée l'extrémité du guide d'ondes (2), les parois latérales (14) s'étendant de la base (12) au collier (16), et l'extrémité du guide d'ondes définissant en outre la cavité à l'intérieur de la coupelle dans laquelle est monté l'ensemble de diodes électroluminescentes (30, 32).

8. Appareil d'éclairage selon la revendication 7 lorsque la revendication 6 dépend de la revendication 5, ou appareil d'éclairage selon la revendication 6 lorsqu'elle dépend de la revendication 5, dans lequel le circuit imprimé(30) est monté sur la base (12) à l'intérieur de la cavité, et dans lequel la base (12) de la coupelle d'éclairage forme un dissipateur de chaleur (13) pour l'ensemble de diodes électroluminescentes.

9. Appareil d'éclairage selon la revendication 8, dans lequel la base (15) de la coupelle d'éclairage (11) est un circuit imprimé qui délivre une alimentation électrique à l'ensemble de diodes électroluminescentes.

10. Appareil d'éclairage selon l'une quelconque des revendications 6 à 9, comprenant de plus un ou plusieurs câbles d'alimentation (35) passant à travers la base ou les parois latérales (14), dans la coupelle (10, 11), et connectés à l'ensemble de diodes électroluminescentes (30, 32), le ou les câbles d'alimentation comprenant des conducteurs (37) et un isolateur (36) autour de chaque conducteur, les isolateurs étant décalés vis-à-vis des conducteurs au niveau des extrémités de borne (38) des conducteurs, les extrémités de borne étant connectées à l'ensemble de diodes électroluminescentes (30, 32), le matériau encapsulant (25) encapsulant les extrémités de borne et une partie de l'isolateur autour de chaque conducteur.

11. Appareil d'éclairage selon l'une quelconque des revendications précédentes, comprenant de plus un dispositif d'alimentation de diodes électroluminescentes encapsulées (315, 316 ; 415, 416) extérieur à la coupelle d'éclairage, de façon à alimenter l'ensemble de diodes électroluminescentes (30, 32).

12. Appareil d'éclairage (300) selon l'une quelconque des revendications précédentes, comprenant de plus un boîtier renfermant la coupelle d'éclairage et le guide d'ondes, le boîtier comprenant une fenêtre (306) pour qu'une lumière émise à partir du guide d'ondes sorte de l'appareil d'éclairage, et la coupelle d'éclairage (100) étant montée sur une paroi latérale (301) formant une surface extérieure du boîtier, la paroi latérale constituant un dissipateur de chaleur.

13. Appareil d'éclairage selon l'une quelconque des revendications précédentes, comprenant de plus une autre coupelle d'éclairage (100), qui est identique à la coupelle d'éclairage, une autre extrémité du guide d'ondes (2) se trouvant au niveau de l'autre coupelle d'éclairage, l'autre coupelle d'éclairage étant configurée de façon à émettre de la lumière dans l'autre extrémité du guide d'ondes.

14. Appareil d'éclairage selon la revendication 13 lorsqu'elle dépend de la revendication 12, dans lequel l'autre coupelle d'éclairage (100) est montée sur une autre paroi latérale (302) formant une autre surface extérieure du boîtier, l'autre paroi latérale constituant un dissipateur de chaleur.

15. Procédé (500) de fabrication de l'appareil d'éclairage selon l'une quelconque des revendications jointes, le procédé comprenant :
- la formation (510) de la coupelle d'éclairage et le montage de l'ensemble de diodes électroluminescentes à l'intérieur de la coupelle d'éclairage ;
- le remplissage (512) de la coupelle d'éclairage par le matériau encapsulant lorsqu'il est sous forme fluide, de façon à encapsuler l'ensemble de diodes électroluminescentes à l'intérieur de la coupelle d'éclairage ; et
- la fixation (514) de l'extrémité du guide d'ondes à la coupelle d'éclairage.
